# EUROPÄISCHE PATENTSCHRIFT

(11) **EP 3 556 060 B1**
(45) Veröffentlichungstag und Bekanntmachung des Hinweises auf die Patenterteilung: **18.06.2025**
(21) Anmeldenummer: 17828698.5
(22) Anmeldetag: 15.12.2017
(51) Int. Cl.: H04L 12/437, H04L 43/0811, H04L 43/0823, H04L 43/50

(54) **VERFAHREN ZUR OPTIMIERUNG DER AUSFALLERKENNUNG VON REDUNDANZ-PROTOKOLLEN MIT TESTDATENPAKETEN**
METHOD FOR OPTIMIZING THE FAILURE DETECTION OF REDUNDANCY PROTOCOLS BY MEANS OF TEST DATA PACKETS
PROCÉDÉ D'OPTIMISATION DE LA RECONNAISSANCE DE DÉFAILLANCE DES PROTOCOLES DE REDONDANCE CONTENANT DES PAQUETS DE DONNÉES D'ESSAI

(30) Priorität: 16.12.2016 DE 102016124584
(43) Veröffentlichungstag der Anmeldung: 23.10.2019
(73) Patentinhaber: Hirschmann Automation and Control GmbH, 72654 Neckartenzlingen (DE)
(72) Erfinder: HUMMEN, René, 73240 Wendlingen (DE); MÜCK, Florian, 71229 Leonberg (DE); KEHRER, Stephan, 72144 Dußlingen (DE); WENDT, Martin, 72658 Bempflingen (DE)
(74) Vertreter: Greif, Thomas
(86) Internationale Anmeldenummer: PCT/EP2017/083105
(87) Internationale Veröffentlichungsnummer: WO 2018/109190

(56) Entgegenhaltungen:
- EP-A1- 1 734 700
- EP-A1- 3 451 591
- WO-A1-2008/037782
- US-A1- 2005 058 149
- US-A1- 2009 161 562
- US-A1- 2016 294 697
- "IEEE P802.1ag/D8.1 -Draft Standard for Local and Metropolitan Area Networks- Amendment 5 to 802.1Q Virtual Bridged Local Area Networks: Connectivity Fault Management", 18 June 2007 (2007-06-18), pages 1,2,135- - 144, XP055230558, Retrieved from the Internet <URL:ieeexplore.ieee.org> [retrieved on 20151123]

## Beschreibung

Die Erfindung betrifft ein Verfahren zum Betreiben eines Netzwerkes, wobei Netzwerkgeräte in dem Netzwerk über zumindest ein Übertragungsmedium untereinander Nutzdaten durch die Übertragung von Nutzdatenpaketen austauschen und zur Verringerung eines Ausfallsrisikos zumindest ein Redundanzprotokoll angewendet wird, wobei dieses zumindest eine Redundanzprotokoll eine Übertragung von Testdatenpaketen zur Detektion von Ausfällen im Netzwerk durchführt, gemäß den Merkmalen des jeweiligen Oberbegriffes der beiden unabhängigen Patentansprüche.

Es sind Verfahren zum Betreiben eines Netzwerkes bekannt, wobei Netzwerkgeräte in dem Netzwerk über zumindest ein Übertragungsmedium untereinander sowie von und an weiteren Geräten wie Sensoren, Aktoren und dergleichen Daten austauschen und zur Verringerung eines Ausfallsrisikos zumindest ein Redundanzprotokoll angewendet wird, wobei dieses zumindest eine Redundanzprotokoll eine zyklische Übertragung von Testdatenpaketen zur Detektion von Ausfällen im Netzwerk durchführt. Netzwerke, insbesondere Ethernet-Datennetze, bilden die technologische Basis zum Beispiel für die industrielle Überwachung und für Steuerungsnetzwerke in Produktionsstraßen. Ein Ausfall beziehungsweise eine Fehlfunktion in diesen Netzwerken ist typischerweise mit einem Verlust an Produktivität beziehungsweise Steuerungs- oder Überwachungssicherheit verbunden.

Weiterer Stand der Technik ist in der US 2009/161562 A1, EP 1 734 700 A1 und der EP 3 451 591 A1 offenbart. 1

Zur Verringerung des Ausfallsrisikos haben sich zum einen Redundanzprotokolle, wie zum Beispiel das Media Redundancy Protocol (MRP) oder der Device Level Ring (DLR), bewährt. Diese Redundanzprotokolle setzen typischerweise neben dem Austausch von Nutzdaten (auch als produktive Daten zu bezeichnen) zwischen den Netzwerkgeräten und weiteren Geräten in dem Netzwerk mittels Nutzdatenpaketen (auch als Frames bezeichnet) die zyklische Übertragung von Testdatenpaketen (auch als Testframes oder Testpakete zu bezeichnen) zur Detektion von Ausfällen im Netzwerk voraus. Abhängig von der Datenmenge, die die Netzwerkgeräte untereinander und gegebenenfalls auch mit den weiteren Geräten in dem Netzwerk austauschen, und der damit verbundenen Auslastung des zumindest einen Übertragungsmediums aufgrund der übertragenen Nutzdatenpakete kann die Übertragung von Testdatenpaketen allerdings signifikant verzögert werden, was die Worst-Case-Umschaltzeit auf redundante Netzwerkpfade im Fehlerfall negativ beeinflusst.

Die Nutzung von Frame Preemption nach IEEE802.3br und IEEE 802.1Qbu ermöglicht zum anderen eine Unterbrechung der Übertragung anderer Daten (Nutzdaten), um so die Latenz für bestimmte Verkehrsklassen der Nutzdatenpakete zu verbessern.

Nach IEEE 802.1Qbv ist es bekannt, mittels eines Time-Division-Multiple-Access-Verfahrens (TDMA) Kommunikationszyklen und den Zugriff auf das Übertragungsmedium anhand von Class-of-Service-Prioritäten (CoS) in einem Virtual Local Area Network (VLAN) Header von Ethernet Frames festzulegen, um damit harte Echtzeitanforderungen mit geringen Latenzen und Abweichungen (Jitter) umzusetzen.

Die Testdatenpakete eines Redundanzprotokolls konkurrieren gewöhnlich bei der Übertragung mit anderen Daten (Nutzdaten) um den Zugriff auf das zumindest eine Übertragungsmedium (zum Beispiel Datenleitung, Funkstrecke oder dergleichen; bei Ethemetanwendungen vor allem drahtgebunden). Bei steigender Nutzung der verfügbaren Bandbreite sowie bei steigender Anzahl an Netzwerkgeräten in dem Netzwerk, insbesondere in einem Ringnetzwerk, können die Nutzdaten zunehmend zu Verzögerungen bei der Weiterleitung von Testdatenpaketen führen. Die Worst-Case-Erkennungs- und Umschaltzeiten von Redundanzprotokollen mit Testdatenpaketen ergeben sich daher durch die maximale Verzögerung bei der Weiterleitung eines Testframes auf jedem Netzwerkgerät.

Der Erfindung liegt daher die Aufgabe zugrunde, ein Verfahren zum Betreiben eines Netzwerkes bereitzustellen, mit dem die eingangs geschilderten Nachteile vermieden werden. Insbesondere soll die Zeit, mit der auf einen anderen Übertragungsweg umgeschaltet werden soll, wenn eine Unterbrechung des zumindest einen Übertragungsmediums festgestellt worden ist, verringert werden.

Diese Aufgabe ist durch die Merkmale der unabhängigen Patentansprüche gelöst.

Die vorliegende Erfindung kombiniert bekannte Verfahren dynamischer Redundanzprotokolle mit Testdatenpaketen und den Einsatz von Frame Preemption oder Zeitschlitzverfahren auf drei alternative oder miteinander kombinierbare Arten und Weisen. Dies ermöglicht jeweils für sich alleine betrachtet oder aber auch in Kombination miteinander eine signifikante Verringerung der Worst-Case-Erkennungszeit eines Ausfalls im Netzwerk und dadurch die Reduktion der WorstCase-Umschaltzeit im Fehlerfall.

Zur Verringerung des Ausfallrisikos haben sich beispielsweis bei Ringnetzwerken die Redundanzprotokolle MRP oder DLR bewährt. Hier überwacht ein als Ringmaster konfiguriertes Netzwerkgerät das Netzwerk, indem er regelmäßig Testdatenpakete durch den Ring schickt. Die Testdatenpakete werden von jedem an dem Redundanzprotokoll teilnehmenden Netzwerkgerät empfangen und weitergeleitet, bis sie wieder bei dem Ringmaster ankommen. Bleiben die Testdatenpakete aus, ist ein Ausfall im Ringnetzwerk vorhanden und ein alternativer Übertragungspfad wird aktiviert.

Gemäß einer ersten Lösung ist erfindungsgemäß vorgesehen, dass die Übertragung eines Nutzdatenpaketes unterbrochen und anstelle der weiteren Übertragung dieses Nutzdatenpaketes ein Testdatenpaket übertragen und erst danach die Übertragung des restlichen Nutzdatenpaketes durchgeführt wird.

Durch die Nutzung von Frame Preemption können die Testdatenpakete von Redundanzprotokollen als Expressdaten behandelt und die Übertragung der Nutzdatenpakete unterbrochen werden. Diese Unterbrechung ermöglicht die priorisierte Übertragung der Testdatenpakete, auch wenn bereits mit der Übertragung eines Nutzdatenpaketes begonnen wurde. Nach Abschluss der Übertragung des Testdatenpakets wird die Übertragung der Nutzdatenpakete wiederaufgenommen und vervollständigt.

Durch die Unterbrechung der Nutzdatenübertragung und der priorisierten Weiterleitung der Testdatenpakete wird die Verweilzeit der Testdatenpakete in den am Redundanzprotokoll teilnehmenden Netzwerkgeräten auf ein durch den Frame Preemption Mechanismus definiertes Minimum reduziert. Dies führt zu einer Unabhängigkeit der Verweilzeiten der Testdatenpakete von der Länge der Nutzdaten und dadurch zu einer signifikanten Reduktion der Worst-Case-Erkennungs- und Umschaltzeiten im Fehlerfall.

Gemäß einer ersten Alternative einer zweiten Lösung ist erfindungsgemäß vorgesehen, dass für die Übertragung von Testdatenpaketen ein vorgebbarer Zeitbereich reserviert wird, wobei innerhalb des vorgebbaren Zeitbereiches keine Nutzdatenpakete (unabhängig von der Verkehrsklasse beziehungsweise der ihnen zugeordneten Priorität) übertragen werden. Für die Übertragung eines Testdatenpaketes steht somit immer ein vorgegebener Zeitbereich zur Verfügung, der mindestens so groß ist, dass innerhalb des vorgegebenen Zeitbereiches das Testdatenpaket übertragen werden kann. Es kann auch daran gedacht werden, die reservierte Zeit für die Übertragung von Testdatenpaketen größer zu wählen, als es für die tatsächliche Übertragung erforderlich ist. In diesem Fall ist sichergestellt, dass die Testdatenpakete mit höchster Priorität und Vorrang vor der Übertragung von Nutzdatenpaketen übertragen werden. Sollte jedoch der vorgegebene Zeitbereich größer sein als die Zeit, die für die Übertragung eines Testdatenpaketes erforderlich ist, wird dadurch die zur Verfügung stehende Bandbreite nicht optimal ausgenutzt, da innerhalb des vorgegebenen Zeitbereiches (Zeitschlitzes) nach dem Versand eines Testdatenpaketes noch Zeit zur Verfügung steht, um Nutzdatenpakete, insbesondere Nutzdatenpakete niedrigerer Priorität, zu übertragen.

Gemäß einer zweiten Alternative der zweiten Lösung ist daher erfindungsgemäß vorgesehen, dass für die Übertragung von Testdatenpaketen ein vorgebbarer Zeitbereich reserviert wird, wobei innerhalb des vorgebbaren Zeitbereichs weiterhin die Übertragung von Nutzdaten erfolgen kann und die Testdatenpakete gegenüber den Nutzdatenpaketen mit einer höheren Übertragungspriorität übertragen werden. Sollte in einem solchen Fall nach der vorrangigen Übertragung eines Testdatenpaketes innerhalb des vorgegebenen Zeitbereiches noch Zeit innerhalb dieses Zeitschlitzes zur Verfügung stehen, können Nutzdatenpakete, insbesondere Nutzdatenpakete niedrigerer Priorität beziehungsweise Nutzdatenpakete, die sich in einer Warteschlange befinden, auch innerhalb dieses Zeitschlitzes übertragen werden. Das bedeutet, dass die Bandbreite optimal ausgenutzt wird und es nicht erforderlich ist, den Ablauf des vorgegebenen Zeitbereiches abzuwarten, bevor weitere Nutzdatenpakete übertragen werden können.

In einer Ausführungsform ist hierzu vorgesehen, dass zunächst ein Testdatenpaket von den Netzwerkgeräten übertragen und erst danach von zumindest einem Netzwerkgerät mit der Übertagung eines Nutzdatenpaketes begonnen wird.

Dadurch, dass innerhalb des vorgebbaren Zeitbereiches (auch als Zeitfenster oder Zeitschlitz zu bezeichnen) keine Nutzdatenpakete übertragen werden, wird in vorteilhafter Weise sichergestellt, dass die Nutzdatenpakete keinerlei Einfluss oder Verzögerung für die Übertragung der Testdatenpakete verursachen können.

Bei der Verwendung von Zeitschlitzverfahren wie beispielsweise IEEE802.1Qbv kann die Verzögerung bei der Weiterleitung eines Testdatenpaketes (Testframes) auf einem Netzwerkgerät aufgrund eines bereits im Versand befindlichen Nutzdatenpaketes (Nutzdatenframes) sogar vollständig eliminiert werden. Testdatenpakete werden über erkennbare Eigenschaften dieser Pakete einer Klasse, einer sogenannten Traffic Class, zugeordnet, für welche dann mittels Zeitschlitzverfahren, wie IEEE802.1Qbv, ein vorgebbarer Zeitschlitz konfiguriert wird. In einem solchen Zeitschlitz entweder innerhalb einer Klasse und/oder auch klassenübergreifend werden die Testdatenpakete dann priorisiert übertragen. Der Vorteil dieser Lösung besteht somit in der Optimierung der Worst-Case-Erkennungs- und Umschaltzeiten und somit in der Nutzung von Zeitschlitzverfahren, wie dem erwähnten "Enhancements for Scheduled Traffic" (IEEE802.1Qbv), um den Übertragungszeitpunkt der Testdatenpakete auf dem Ring durch dedizierte Zeitschlitze ohne zusätzliche Wartezeit im weiterleitenden Netzwerkgerät zu ermöglichen. Ein vorgebbarer Anteil der verfügbaren Bandbreite der Netzwerkkapazität wird somit für Testframes (Testdatenpakete) reserviert. Für eine optimale Nutzung des Ausfallerkennungszeitraums versendet der Ringmaster die Testframes synchronisiert mit dem Start des für Testframes vorgesehenen Zeitschlitzes.

In Weiterbildung der Erfindung ist das Erzeugen der Testdatenpakete in dem Netzwerkgerät, das als Master konfiguriert ist, zeitlich an die Öffnung des für die Testdatenpakete vorgesehenen Zeitschlitzes gekoppelt. Hierdurch wird bestmögliche Nutzung des Zeitfensters für die Übertragung des Testdatenpaketes realisiert.

Aufgrund der Längenunabhängigkeit ist im Gegensatz zum bekannten Stand der Technik die Verwendung von Jumbo-Frames (d.h. überlange Datenpakete) ebenfalls ohne Beeinträchtigung der Worst-Case-Erkennungs- und Umschaltzeiten möglich.

Schließlich ist die Erfindung nicht auf Ringredundanzprotokolle beschränkt, sondern erstreckt sich unabhängig von der Topologie des Netzwerkes über Redundanzprotokolle, die auf dem Einsatz von Testdatenpaketen basieren.

Nach der Erfindung wird somit in vorteilhafter Weise immer durch die minimierte Wartezeit von Testdatenpaketen auf Netzwerkgeräten die Erkennung eines Ausfalles (Unterbrechung der Übertragung gleich aus welchem Grund, wie zum Beispiel Kabelbruch, gezogener oder defekter Steckverbinder, Stromausfall bei einem Netzwerkgerät oder dergleichen) schnell erkannt, so dass die Zeit bis zu einer Erkennung eines Ausfalles minimiert wird.

Eine Beispielrechnung kann den Beitrag der Erfindung verdeutlichen. In DIN EN 62439-2:2010-09 (MRP), Kapitel 9.5.4, wird eine Worst-Case-Berechnung für 50 Ringteilnehmer durchgeführt, mit dem Ergebnis einer Umschaltzeit von 26,2 ms. Setzt man für T_{Queue} den Wert für kleinste Framelets bei Frame Preemption von 64 Byte / 5,12 µs ein, so ergeben sich nur noch 14,5 ms. Durch Verwendung des Zeitschlitzverfahrens kann T_{Queue} auf 0 µs sinken, die Umschaltzeit beträgt dann nur noch 14,0 ms.

Die beiden vorstehend allgemein beschriebenen Lösungen werden im Folgenden unter Bezugnahme auf die Figuren anhand eines Ausführungsbeispiels näher beschrieben.

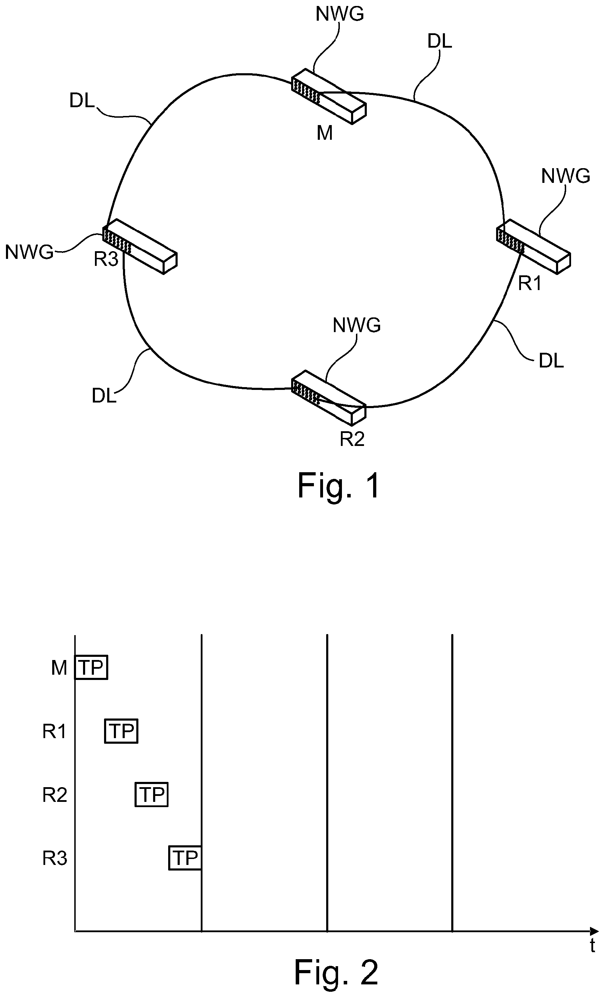

Figur 1 zeigt beispielhaft ein Netzwerk in Form einer Ringtopologie, in dem vier Netzwerkgeräte NWG vorhanden sind. Diese Netzwerkgeräte NWG sind über ein drahtgebundenes Übertragungsmedium, insbesondere eine Datenleitung DL, zwecks Übertragung von Daten miteinander verbunden. Es wird davon ausgegangen, dass zur Anwendung eines Redundanzprotokolles, wie zum Beispiel der Anwendung des Media Redundancy Protocols (MRP) oder des Device Level Ring (DLR), ein Netzwerkgerät als Master (in Figur 1 als M bezeichnet) konfiguriert ist, während die übrigen Netzwerkgeräte NWG als Clients konfiguriert sind (in der Figur 1 als R1, R2 und R3 bezeichnet). In an sich bekannter Weise können dann, wenn mittels der ausgesandten Testdatenpakete innerhalb des Netzwerkes ein Fehler festgestellt wird, auf die Übertragung der Nutzdaten (und auch der Testdatenpakete) andere Übertragungsabschnitte umgeschaltet werden, so dass anhand der bekannten Redundanzprotokolle auch ein anderes Netzwerkgerät NWG die Funktion eines Masters einnehmen kann, das bisher als Client konfiguriert war. Diese Umschaltmechanismen, die auch hier angewandt werden, sind grundsätzlich bekannt, so dass es an dieser Stelle entbehrlich ist, hierauf näher einzugehen.

In der Figur 1 sind vier Netzwerkgeräte NWG beispielhaft dargestellt, wobei in der Praxis oftmals mehr als vier Netzwerkgeräte NWG, seltener weniger als vier Netzwerkgeräte NWG vorhanden sind.

In Figur 2 ist der Durchlauf von Testdatenpaketen TP innerhalb der Ringtopologie gemäß Figur 1 dargestellt. Das Netzwerkgerät NWG, welches als Master M konfiguriert ist, sendet ein Testdatenpaket TP an das nächste Netzwerkgerät NWG (hier der Client R1) aus. Von dort aus sendet dieser Client R1 das Testdatenpaket an das nächste Netzwerkgerät NWG, nämlich den nächsten Client R2. Wenn hier das Testdatenpaket TP empfangen worden ist, wird es weitergeleitet an das nächste Netzwerkgerät NWG, nämlich den Client R3, der das empfangene Testdatenpaket an den Master M weiterleiten kann. Aufgrund dieses Mechanismus wird in an sich bekannter Weise erkannt, dass der Ring geschlossen ist und keine Unterbrechung vorliegt.

An dieser Stelle sei erwähnt, dass diese Vorgehensweise anhand einer Ringtopologie beschrieben wird. Die Erfindung ist jedoch nicht auf Ringtopologien beschränkt und kann auf andere Netzwerktopologien, wie z. B. Linientopologien, genauso angewandt werden.

In Figur 2 ist der Durchlauf von Testdatenpaketen durch das Ringnetzwerk im Idealfall dargestellt, der einen Austausch von Nutzdaten in Form von Nutzdatenpaketen noch nicht berücksichtigt. Es handelt es sich somit um einen theoretischen Idealfall, der in der Praxis nicht vorkommen wird, da er die Übertragung von Nutzdatenpaketen innerhalb des Netzwerkes nicht berücksichtigt.

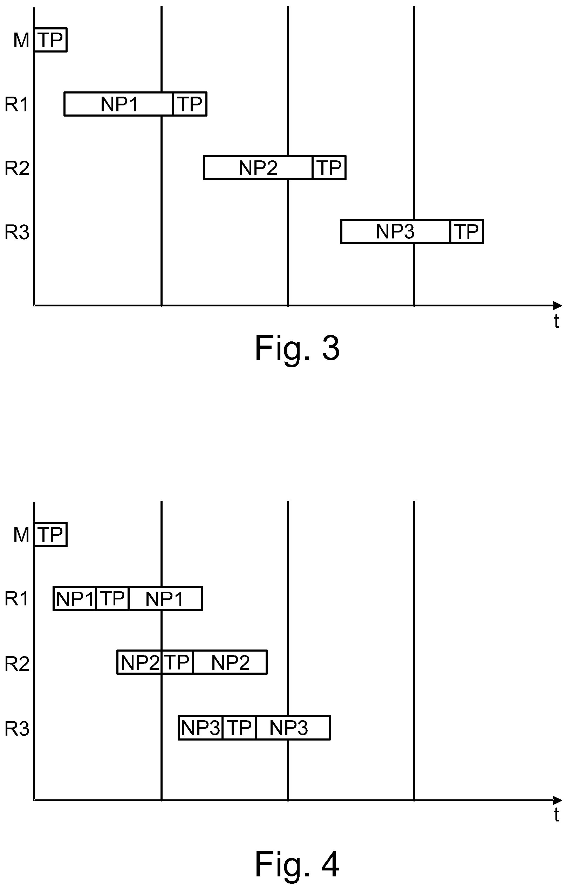

In Figur 3 ist der Fall berücksichtigt, dass nicht nur die Testdatenpakete über die Netzwerkgeräte übertragen werden, sondern dass auch Nutzdatenpakete zwischen den einzelnen Netzwerkgeräten und über diese hinweg übertragen werden.

In der Figur 3 ist der Worstcase bei dieser Übertragung von Testdatenpaketen und Nutzdatenpaketen dahingehend dargestellt, dass der Master M ein Testdatenpaket aussendet. Da der Client R1 ein Nutzdatenpaket NP1 verarbeitet, insbesondere aussendet, kann das von dem Master M empfangene Testdatenpaket TP erst dann weitergeleitet werden, wenn das Nutzdatenpaket NP1 vollständig übertragen worden ist. Gleiches gilt für die weiteren Netzwerkgeräte R2 und R3, so dass sich in jedem Fall aufgrund der Verarbeitung beziehungsweise Aussendung der weiteren Nutzdatenpakete NP2 beziehungsweise NP3 die Weiterleitung des Testdatenpaketes durch die weiteren Netzwerkgeräte NWG (hier die Clients R2 und R3) verzögert.

Gemäß der ersten Lösung nach der Erfindung wird, wie es in Figur 4 dargestellt ist, die Übertragung eines Nutzdatenpaketes unterbrochen und anstelle der weiteren Übertragung dieses Nutzdatenpaketes ein Testdatenpaket übertragen und erst danach die Übertragung des restlichen Nutzdatenpaketes durchgeführt. Mit Blick auf die Figur 4 bedeutet dies, dass das erste Netzwerkgerät (der Master M, der nicht zwangsweise das erste Netzwerkgerät sein muss, sondern ein beliebig anderes Netzwerkgerät sein kann) ein Testdatenpaket aussendet und das nächste - Netzwerkgerät NWG, hier der Client R1, mit der Aussendung eines Nutzdatenpaketes 1 beginnt. Nach der Erfindung wird jedoch nicht abgewartet, bis das Nutzdatenpaket NP1 von dem Netzwerkgerät R1 vollständig übertragen worden ist, sondern es erfolgt eine Unterbrechung der Übertragung dieses Nutzdatenpaketes NP1, um die Aussendung des Testdatenpaketes TP durch das Netzwerkgerät R1 zu veranlassen. Nachdem dies erfolgt ist, wird das restliche Nutzdatenpaket NP1 (in der Figur 4 der größere Teil von NP1) ausgesendet.

Der gleiche Vorgang erfolgt bei dem Netzwerkgerät R2, welches bei Empfang des Testdatenpaketes schon mit der Aussendung eines Nutzdatenpaketes NP2 begonnen hat. Wenn das Testdatenpaket TP des Netzwerkgerätes R1 von dem Netzwerkgerät R2 empfangen worden ist wird die schon begonnene Übertragung des Nutzdatenpaketes NP2 unterbrochen und das Testdatenpaket TP von dem Netzwerkgerät R2 ausgesendet. Nachdem dies erfolgt ist, wird der restliche Teil des Nutzdatenpaketes NP2 (auch hier beispielhaft der größere Teil) weiter übertragen.

Dies setzt sich bei dem weiteren Netzwerkgerät R3 fort, so dass der erfindungsgemäße erste Lösungsansatz die deutliche Verkürzung der Übertragungszeit eines Testdatenpaketes TP auf dem Ringnetzwerk deutlich macht gegenüber dem Worstcase, der in Figur 3 dargestellt ist.

Die Länge beziehungsweise Größe des jeweiligen Nutzdatenpaketes NP1, NP2 beziehungsweise NP3 gemäß Figur 4 richtet sich nach dem Zeitpunkt, an dem das jeweilige Testdatenpaket TP auf dem jeweiligen Netzwerkgerät empfangen wurde. Das bedeutet, dass die Länge beziehungsweise Größe der Nutzdatenpakete NP1, NP2 und NP3 vor und hinter dem Testdatenpaket TP auch gleich groß oder anders gerichtet sein können, als wie dies in Figur 4 dargestellt ist.

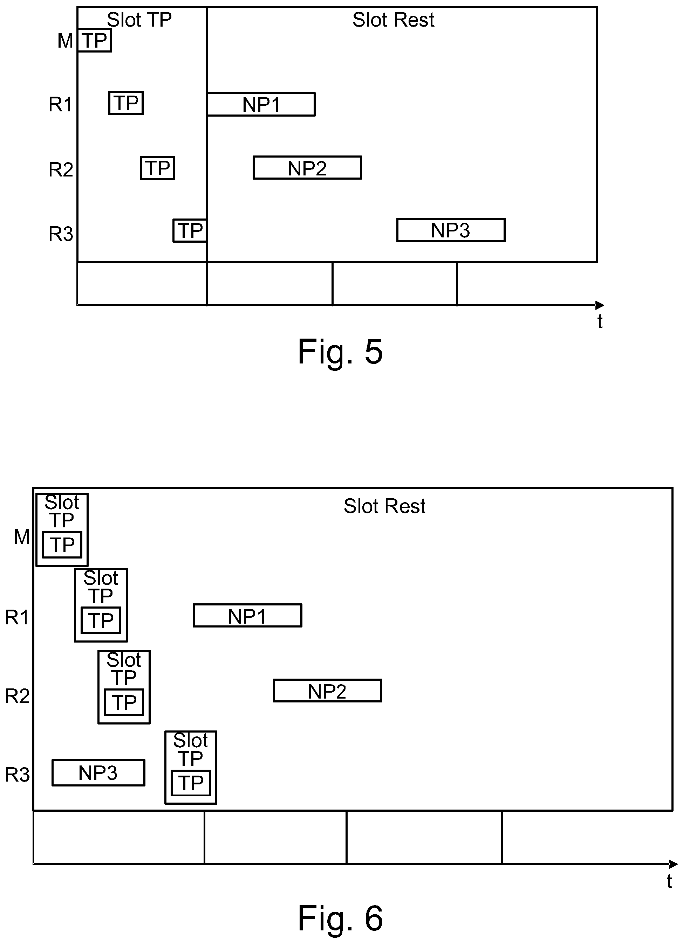

In Figur 5 ist eine Alternative der zweiten erfindungsgemäßen Lösung anhand einer Ausführungsform dargestellt, bei dem für alle Netzwerkgeräte ein vorgebbarer Zeitbereich (Zeitschlitz Slot TP) reserviert ist und zunächst ein Testdatenpaket von den Netzwerkgeräten übertragen und erst danach von zumindest einem Netzwerkgerät mit der Übertragung eines Nutzdatenpaketes begonnen wird. Das bedeutet mit Blick auf die Figur 5, dass ein Zeitschlitz für die Testdatenpakete (Slot TP) reserviert ist, so dass ein Testdatenpaket immer über das Netzwerk übertragen wird, bevor es zu einer Übertragung von Nutzdatenpaketen kommt.

In dem Beispielfall gemäß Figur 5 sendet also der Master M innerhalb des reservierten Zeitschlitzes sein Testdatenpaket TP aus, welches von dem Client R1 empfangen und weitergeleitet wird. Gleiches gilt für das Testdatenpaket TP, welches von dem Client R1 ausgesandt und von dem Client R2 empfangen wird, genauso wie für das Testdatenpaket TP, welches von dem Client R2 ausgesandt und von dem Client R3 empfangen wird. Erst wenn innerhalb dieses reservierten Zeitschlitzes für die Testdatenpakete TP deren Übertragung erfolgt ist, kann das zumindest eine weitere Netzwerkgerät, in diesem Beispielfall der Client R1, sein Nutzdatenpaket NP1 aussenden. Gleiches gilt auch für die beiden weiteren Netzwerkgeräte R2 und R3, die erst dann ihre Nutzdatenpakete NP2 beziehungsweise NP3 aussenden können, wenn das Testdatenpaket TP innerhalb des reservierten Zeitschlitzes (Slot TP) übertragen worden ist. Während des durch den Zeitschlitz reservierten Zeitraums können somit keine Nutzdatenpakete übertragen werden, auch nicht dann, wenn das Testdatenpaket schon fertig übertragen wurde. Die Nutzdatenpakete müssen daher warten, bis sich das ihnen zugeordnete Zeitfenster öffnet.

In Figur 6 ist der allgemeine Fall der zweiten erfindungsgemäßen Lösung dargestellt. In diesem Fall wird für die Übertragung von Testdatenpaketen ein vorgebbarer Zeitbereich reserviert wird, wobei innerhalb des vorgebbaren Zeitbereiches keine Nutzdatenpakete übertragen werden. Dies können somit zumindest zwei oder auch mehrere Zeitschlitze (im Gegensatz zu einem Zeitschlitz für alle Netzwerkgeräte) und auch unterschiedliche Zeitschlitze auf verschiedenen Netzwerkgeräten sein, um Pfadund Verarbeitungslatenzen zu berücksichtigen.

In Figur 6 ist somit dargestellt, dass jedem Netzwerkgerät (M, R1 bis R3) ein reservierter Zeitschlitz (Slot TP) zugeordnet ist, in dem das Testdatenpaket TP übertragen werden kann. Die Übertragung der Nutzdatenpakete ist vor und nach diesem reservierten Zeitschlitz jederzeit möglich. So ist in diesem Ausführungsbeispiel dargestellt, dass das Netzwerkgerät, das als Master M konfiguriert ist, in einem dafür reservierten Zeitschlitz ein Testdatenpaket an den Client R1 aussendet. Vor und nach dem reservierten Zeitschlitz kann das als Master konfigurierte Netzwerkgerät Nutzdatenpakete empfangen und aussenden. Der Client R1 hat seinerseits einen Zeitschlitz reserviert, innerhalb dessen er das empfangene Testdatenpaket TP weiterleiten kann. In Figur6 ist gezeigt, dass das Nutzdatenpaket NP1 des Client R1 nach dem reservierten Zeitschlitz für das Testdatenpaket TP ausgesendet wird. Gleiches gilt für den Client R2. auch der Client R3 hat einen Zeitschlitz für das Testdatenpaket TP reserviert. Allerdings kann dieser Client R3 seinerseits sein Nutzdatenpaket NP3 schon vor dem reservierten Zeitschlitz aussenden.

Die von den jeweiligen Netzwerkgeräten reservierten Zeitschlitze sind gleich (haben also die gleiche zeitliche Länge). Alternativ können je Netzwerkgerät oder auch je Netzwerkgerätgruppe unterschiedliche Zeitschlitze für die Testdatenpakete reserviert werden (im Netzwerkgerät durch Konfiguration einzustellen). Dabei ist darauf zu achten, dass der vorgebbare Zeitbereich (Zeitschlitz) eine solche zeitliche Mindestlänge aufweist, die für die sichere und vollständige Übertragung eines Testdatenpaketes ausreicht.

Bei dieser Alternative der zweiten erfindungsgemäßen Lösung werden somit die Testdatenpakete in den reservierten Zeitschlitz der Netzwerkgeräte bevorzugt übertragen, sodass entweder die Übertragung eines Netzdatenpaketes vor dem reservierten Zeitschlitz erfolgen muss oder erst nach der Übertragung des Test Datenpaketes innerhalb seines reservierten Zeitschlitzes erfolgt. Damit ist in vorteilhafter Weise sichergestellt, dass immer dann, wenn ein Testdatenpaket für die Übertragung ansteht, kein Nutzdatenpaket in der Übertragung befindlich ist und die Übertragung des Testdatenpaketes behindert.

Auch durch diese zweite Lösung kommt es zu einer deutlich schnelleren Übertragung der Testdatenpakete (insbesondere bei einem Vergleich mit der Figur 3), so dass im Fehlerfalle wesentlich schneller auf einen solchen Fehlerfall reagiert und umgeschaltet werden kann.

Bei der zweiten erfindungsgemäßen Lösung (bei einer der beiden oder auch bei beiden Alternativen) werden somit die Testdatenpakete, genauso wie bei der ersten erfindungsgemäßen Lösung, als sogenannte Expressdaten behandelt, wobei bei der ersten Lösung die Nutzdatenpakete unterbrochen werden und bei der zweiten Lösung die Testdatenpakete höchste Priorität und somit "freie" Fahrt auf dem Netzwerk haben.

## Patentansprüche

1. Verfahren zum Betreiben eines Netzwerkes, wobei Netzwerkgeräte in dem Netzwerk über zumindest ein Übertragungsmedium untereinander Nutzdaten durch die Übertragung von Nutzdatenpaketen austauschen und zur Verringerung eines Ausfallsrisikos zumindest ein Redundanzprotokoll angewendet wird, wobei dieses zumindest eine Redundanzprotokoll eine Übertragung von Testdatenpaketen zur Detektion von Ausfällen im Netzwerk durchführt, **dadurch gekennzeichnet, dass** die Übertragung eines Nutzdatenpaketes unterbrochen und anstelle der weiteren Übertragung dieses Nutzdatenpaketes ein Testdatenpaket zur Detektion von Ausfällen im Netzwerk übertragen und erst danach die Übertragung des restlichen Nutzdatenpaketes durchgeführt wird.

2. Verfahren zum Betreiben eines Netzwerkes, wobei Netzwerkgeräte in dem Netzwerk über zumindest ein Übertragungsmedium untereinander Nutzdaten durch die Übertragung von Nutzdatenpaketen austauschen und zur Verringerung eines Ausfallsrisikos zumindest ein Redundanzprotokoll angewendet wird, wobei dieses zumindest eine Redundanzprotokoll eine Übertragung von Testdatenpaketen zur Detektion von Ausfällen im Netzwerk durchführt, **dadurch gekennzeichnet, dass** für die Übertragung von Testdatenpaketen zur Detektion von Ausfällen im Netzwerk ein vorgebbarer Zeitschlitz reserviert wird, wobei innerhalb des vorgebbaren Zeitschlitzes keine Nutzdatenpakete übertragen werden.

3. Verfahren zum Betreiben eines Netzwerkes, wobei Netzwerkgeräte in dem Netzwerk über zumindest ein Übertragungsmedium untereinander Nutzdaten durch die Übertragung von Nutzdatenpaketen austauschen und zur Verringerung eines Ausfallsrisikos zumindest ein Redundanzprotokoll angewendet wird, wobei dieses zumindest eine Redundanzprotokoll eine Übertragung von Testdatenpaketen zur Detektion von Ausfällen im Netzwerk durchführt, **dadurch gekennzeichnet, dass** die Übertragung von Testdatenpaketen zur Detektion von Ausfällen im Netzwerk ein vorgebbarer Zeitschlitz reserviert wird, wobei innerhalb des vorgebbaren Zeitschlitzes weiterhin die Übertragung von Nutzdaten erfolgen kann und die Testdatenpakete gegenüber den Nutzdatenpaketen mit einer höheren Übertragungspriorität übertragen werden.

4. Verfahren zum Betreiben eines Netzwerkes nach Anspruch 2 oder 3, **dadurch gekennzeichnet, dass** zunächst ein Testdatenpaket von dem Netzwerkgerät, welches als Master konfiguriert ist, übertragen und erst danach von zumindest einem Netzwerkgerät mit der Übertagung eines Nutzdatenpaketes begonnen wird.

5. Verfahren zum Betreiben eines Netzwerkes nach Anspruch 2 oder 3, **dadurch gekennzeichnet, dass** ein Erzeugen der Testdatenpakete in dem Netzwerkgerät, das als Master konfiguriert ist, zeitlich an die Öffnung des für Testdatenpakete vorgesehenen Zeitschlitzes gekoppelt ist.

6. Verfahren zum Betreiben eines Netzwerkes nach einem der vorhergehenden Ansprüche, **dadurch gekennzeichnet, dass** Testdatenpakete zur Detektion von Ausfällen im Netzwerk höher priorisiert werden und somit Wartezeiten für Testdatenpakete auf Netzwerkgeräten auf ein Minimum reduziert werden, welches bis zur erfolgten Unterbrechung eines niedriger priorisierten Nutzdatenpacket notwendig ist.

## Claims

1. Method for operating a network, wherein network devices in the network exchange useful data with one another via at least one transmission medium through the transmission of useful data packets and at least one redundancy protocol is applied in order to reduce a failure risk, wherein this at least one redundancy protocol performs a transmission of test data packets in order to detect failures in the network, **characterized in that** the transmission of a useful data packet is interrupted and, instead of the further transmission of this useful data packet, a test data packet is transmitted in order to detect failures in the network and only thereafter is the transmission of the remaining useful data packet carried out.

2. Method for operating a network, wherein network devices in the network exchange useful data with one another via at least one transmission medium through the transmission of useful data packets and at least one redundancy protocol is applied in order to reduce a failure risk, wherein this at least one redundancy protocol performs a transmission of test data packets in order to detect failures in the network, **characterized in that** a predefinable time slot is reserved for the transmission of test data packets in order to detect failures in the network, wherein no useful data packets are transmitted within the predefinable time slot.

3. Method for operating a network, wherein network devices in the network exchange useful data with one another via at least one transmission medium through the transmission of useful data packets and at least one redundancy protocol is applied in order to reduce a failure risk, wherein this at least one redundancy protocol performs a transmission of test data packets in order to detect failures in the network, **characterized in that** a predefinable time slot is reserved for the transmission of test data packets in order to detect failures in the network, wherein the transmission of useful data can continue to take place within the predefinable time slot and the test data packets are transmitted with a higher transmission priority compared to the useful data packets.

4. Method for operating a network according to Claim 2 or 3, **characterized in that** a test data packet is first transmitted by the network device which is configured as the master and only thereafter does at least one network device start to transmit a useful data packet.

5. Method for operating a network according to Claim 2 or 3, **characterized in that** generation of the test data packets in the network device which is configured as the master is temporally linked to the opening of the time slot provided for test data packets.

6. Method for operating a network according to one of the preceding claims, **characterized in that** test data packets for detecting failures in the network are given a higher priority, and waiting times for test data packets on network devices are thus reduced to a minimum which is necessary until a lower-priority useful data packet has been interrupted.

## Revendications

1. Procédé pour faire fonctionner un réseau, des périphériques de réseau dans le réseau échangeant entre eux des données utiles par le biais d'au moins un support de transmission par la transmission de paquets de données utiles et, afin de réduire un risque de défaillance, au moins un protocole de redondance étant utilisé, cet au moins un protocole de redondance effectuant une transmission de paquets de données de test afin de détecter des défaillances dans le réseau, **caractérisé en ce que** la transmission d'un paquet de données utiles est interrompue et, à la place de la poursuite de la transmission de ce paquet de données utiles, un paquet de données de test est transmis en vue de la détection des défaillances dans le réseau, et la transmission du reste du paquet de données utiles n'est effectuée qu'ensuite.

2. Procédé pour faire fonctionner un réseau, des périphériques de réseau dans le réseau échangeant entre eux des données utiles par le biais d'au moins un support de transmission par la transmission de paquets de données utiles et, afin de réduire un risque de défaillance, au moins un protocole de redondance étant utilisé, cet au moins un protocole de redondance effectuant une transmission de paquets de données de test afin de détecter des défaillances dans le réseau, **caractérisé en ce qu'**un créneau temporel pouvant être prédéfini est réservé pour la transmission de paquets de données de test en vue de la détection de défaillances dans le réseau, aucun paquet de données utiles n'étant transmis à l'intérieur du créneau temporel pouvant être prédéfini.

3. Procédé pour faire fonctionner un réseau, des périphériques de réseau dans le réseau échangeant entre eux des données utiles par le biais d'au moins un support de transmission par la transmission de paquets de données utiles et, afin de réduire un risque de défaillance, au moins un protocole de redondance étant utilisé, cet au moins un protocole de redondance effectuant une transmission de paquets de données de test afin de détecter des défaillances dans le réseau, **caractérisé en ce qu'**un créneau temporel pouvant être prédéfini est réservé pour la transmission de paquets de données de test en vue de la détection de défaillances dans le réseau, la transmission de données utiles pouvant continuer à s'effectuer à l'intérieur du créneau temporel pouvant être prédéfini et les paquets de données de test étant transmis avec une priorité de transmission plus élevée que les paquets de données utiles.

4. Procédé pour faire fonctionner un réseau selon la revendication 2 ou 3, **caractérisé en ce qu'**un paquet de données de test est d'abord transmis par le périphérique de réseau configuré en tant que maître, et que la transmission d'un paquet de données utiles n'est débutée qu'ensuite par au moins un périphérique de réseau.

5. Procédé pour faire fonctionner un réseau selon la revendication 2 ou 3, **caractérisé en ce qu'**une génération des paquets de données de test dans le périphérique de réseau qui est configuré en tant que maître est couplée dans le temps à l'ouverture du créneau temporel prévu pour les paquets de données de test.

6. Procédé pour faire fonctionner un réseau selon l'une des revendications précédentes, **caractérisé en ce que** des paquets de données de test destinés à détecter des défaillances dans le réseau se voient attribuer une priorité plus élevée et les temps d'attente des paquets de données de test sur les périphériques du réseau sont ainsi réduits au minimum, lequel est nécessaire jusqu'à l'interruption effective d'un paquet de données utiles ayant une priorité moins élevée.
